(19)

Europäisches
Patentamt
European
Patent Office
Office européen
des brevets

(11) **EP 3 306 783 A1**

(12) **EUROPEAN PATENT APPLICATION**
published in accordance with Art. 153(4) EPC

(43) Date of publication:
**11.04.2018 Bulletin 2018/15**

(21) Application number: **16803818.0**

(22) Date of filing: **03.06.2016**

(51) Int Cl.:
**H02K 1/06** *(2006.01)*          **H02K 3/04** *(2006.01)*

(86) International application number:
**PCT/KZ2016/000011**

(87) International publication number:
**WO 2016/195465 (08.12.2016 Gazette 2016/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.06.2015 KZ 20150738**

(71) Applicant: **Saparqaliyev, Aldan Asanovich
Almaty 050058 (KZ)**

(72) Inventor: **Saparqaliyev, Aldan Asanovich
Almaty 050058 (KZ)**

(74) Representative: **Guardian
IP Consulting I/S
Diplomvej, Building 381
2800 Kgs. Lyngby (DK)**

(54) **ELECTRIC MACHINE AND ELECTRIC DRIVE**

(57)    The present invention relates to a structure of operating the system of inductively interacting blocks (SIB) in EM, as well as to an electric drive. In particular, the present invention describes technology of multi-sector EM and regulated compensation of the total torque transmitted to the common starter of two oppositely rotating EM rotors, including a full compensation of the total torque. The main object of the present invention is to increase the energy intensity of EM. The invention further provides an increase in the efficiency value and reduction of material capacity of EM. Wherein, the proposed SIB variants encompass all types of EM. The invention can be used for development of new energy-efficient types of EM and for large-scale (mass) use of compact and environmentally friendly electric motors, instead of environmentally harmful and bulky internal combustion engines.

EP 3 306 783 A1

## Description

The present invention relates to EM (EM - electric machine), made as oEM (oEM - one-vector electric machine) or as mEM (mEM - multi-vector electric machine), including its rotational REM (RREM - round rotational, CREM - curvilinear-rotational) and reciprocative, (rectilinear or curvilinear) motion types, as well as to electric drive.

More specifically, the present invention relates to multi-sector EM, wherein the total amount of SIC sectors (SIC - surface of inductive coupling) is at least two.

This application adheres to the systematic terms and abbreviations used in WO 2015137790 A3. These terms and abbreviations will be commented in this application during discussion of known and proposed technical solutions.

Here is a list of some of the mentioned and used in WO 2015137790 A3 and this description terms and abbreviations.

EM - electric machine,

oEM - one-vector electric machine,

mEM - multi-vector electric machine,

REM - rotational type of electric machine (RREM - round rotational, or

CREM - curvilinear-rotational motion type of electric machine),

BFEM - electric machine of reciprocative type (rectilinear or curvilinear motion type electric machine),

SIB - system of inductively-interacting blocks, consisting of two subsystems of inductive blocks (SSIB), in particular case, SSAMB and SSOEB,

SSIB - subsystem of inductive blocks, which consists of at least two blocks,

SSAMB - electromagnetic subsystem of blocks, which consist of at least one electromagnetic block (AMB),

SSOEB - source-off subsystem block, which consist of one or more source-off blocks (OEBs),

AMB - electromagnetic block,

OEBs - source-off block (block does not have electric power supply),

IB - inductive block,

SHM - contour of characteristic line of motion (contour of a boundary between moving and stationary inductive blocks),

ZIC - zone of inductive coupling (zone where inductive coupling between inductive blocks is possible),

SIC - surface of inductive coupling (surface where inductive coupling takes place),

SDB - system of drive blocks,

SSDB - subsystem of drive blocks,

ZDC - zone of drive clutch (zone where drive clutch is possible),

SDC - surface of drive clutch (surface where drive clutch is implemented),

ED - electric drive,

EMSSOEB - electric machine with source-off block.

In EM applications, where the foreground requirements (the main ones) are small size and high efficiency (coefficient of efficiency), there are used EMs with source-off subsystem (EMSSOEB), containing SSIB with source-off block (OEB), where one of IB is designed as an electromagnet and others are as source-off block (OEB) including with permanent magnets.

The most widespread EM is one with source-off subsystem EMSSOEB of a round-rotational motion type (REMSSOEB) with SIB of rotational type, relative to a given axis, that include the base fraction of a one-vector electromagnet of vertical scan ($h$-scan) and a top end attachment (Ob $h$-REMSSOEB). Patents demonstrating some of these specific functional features are - US 8508094 B2, US 8,368,273, US 8,013,489 B2, US 8,310,126 B1, and EP 2466725 A1.

In US 8508094 B2 it is offered **Ob** $h$-REMSSOEB with a high concentration of magnetic flux from the rotor permanent magnets. It also suggested solutions to problems of optimal compromise between the maximum value of torque and the minimum value of mechanical inertia of its rotor, on which the OEB is placed on. US 8368273 suggested ways to minimize torque ripple of **Ob** $h$-REMSSOEB, based on the provisions of rebounds of air gaps among poles of the permanent magnets of OEB, which is placed on the rotor. Thus, several rows of permanent magnets can be placed on the rotor in its axial direction. US 8013489 B2, unlike US 8,508,094 B2 and US 8,368,273, placed AMB on the rotor shaft, which enables to reduce the dimensions of low-power motors. In US 8310126 B1: suggested manufacture of AMB electromagnets using powdered metal kernels; offered regulation temperature of AMB based on the circulation of the coolant through the tube; discussed advantages of sinusoidal controllers compared with Hall sensors in detecting the position of the permanent magnets of OEB against parts of AMB. Detection of position of permanent magnets is necessary for management of AMB power supply to vary the speed of OEB relative to AMB. EP 2466725 A1 suggested providing OEB with protrusions for detecting the position of permanent magnets against AMB parts.

In order to increase the efficiency and output power at small sizes of REMSSOEB, it appears interesting possibility of creating and using REMSSOEB with closed fraction of SIB (OI-REMSSOEB).

OI-REMSSOEB is divided into two types: of vertical (**OI** *h*-REMSSOEB) scan, often referred to as Dual-rotor motor, e.g., US 7898134 B1, US 20080088200 A1; and horizontal scan (**OI**λ-REMSSOEB), often referred to as pancake-type motor/generator, e.g., US 20060244320 A1, US 8242661 B2, US 20130147291 A1.

EP2242167A3 disclosed a structure for linear and rotary electric machines. The invention provided a modular mover structure which includes coils that have an electrical phase difference 180°, so that the path of magnetic flux is shortened, thus reducing the size of the machine and mitigating the back-EMF unbalance. Furthermore, the modular mover structure can be modified into various shapes.

US 20110291504 A1 disclosed the rim for electric motor/generator (RMG), utilizing the solenoid principle. The scope of the invention includes the use of solenoid principle in said rim (ring) shape configuration of solenoids to generate circular motion.

US 20130057091 A1 disclosed a switched reluctance motor having a double rotor structure. An out stator salient pole corresponding to an out rotor salient pole is formed to have an E-shape by sequentially disposing a main salient pole, a first auxiliary salient pole, and a second auxiliary salient pole and an in stator salient pole corresponding to an in rotor salient pole is formed to have a pi (π) shape by sequentially disposing a first salient pole and a second salient pole, such that a magnetic flux path is reduced, thereby making it possible to prevent the loss of magnetic force.

In US 20130049494 A1 the object of the invention is WFD including: an apparent pole stator type that includes multiple of teeth having windings around it and a magnet mounted between the teeth; and a protrusion of the rotor pole type that is inserted in the central part of the stator and rotates, where the magnet is installed between the teeth having windings around it.

In practice, it is also used reciprocative EMSSOEB with a closed fraction of SIB of horizontal scan (**OI** λ-LEMSSOEB) of rectilinear or curvilinear motion, on which some information is available at, for example, US 20130249324 A1, US 8587163 B2 and US 8593019 B2.

US 20130249324 A1 proposed **OI** λ-LEMSSOEB with SIB of reciprocative motion, in which the geometry of magnetless SSOEB teeth is optimized in order to obtain high efficiency values. In US 8587163 B2 it is proposed **OI** λ-LEMSSOEB SIB of reciprocating type, wherein the SIB is penetrated by a single guide rod.

There are a number of inventions, for example, US20090009010 A1, US 8593019 B2, US 8624446, and US 20130076159 A1, which offered various EMSSOEBs with SIB fraction that can be used in the induction system of any of the rotational (RR EM - round-rotational, CR EM - curvilinear-rotational) and reciprocating types of EMSSOEB.

US 20090009010 A1 offered EMSSOEB with a closed fraction of SIB, comprising double-side multi-directional twin-in-line (double-line) electromagnet winding at different locations of the permanent magnets on teeth of SSAMB or SSOEB.

US 8593019 B2, US 8,624,446, and US 20130076159 A1 offered EMSSOEB with various options of SIB fraction: base fraction, closed fraction. US 8593019 B2 proposed EMSSOEB, wherein adjacent electromagnets are in electrical phase difference 180° and at various locations on the permanent magnets on teeth of SSAMB or SSOEB. It also discussed the reciprocative LEMSSOEB of curvilinear motion with the joints between AMOs.

US 8624446 offered EMSSOEB with SSAMB blocks with ternary winding ensembles of electromagnets in which adjacent ensembles of electromagnets have electrical phase difference 60°.

US 20130076159 A1 proposed EMSSOEB with SSAMB blocks with different kinds of winding ensembles of electromagnets. One block of SSAMB may consist of several parts.

US 8339003 B1 proposed a geared motor with a round-rotational EM, in which: SIC (SIC - surface of inductive coupling) of the electromagnetic subsystem (SSAMB) of starter block performed as one-SIC-sector and located in an arc with an azimuth angle less than 220°; ZIC of source-off subsystem (SSDB) of rotor block is made as full-interval SIC.

US 8593019 B2 proposed EM of curvilinear motion in which: SIC (SIC - inductive coupling surface) of the electromagnetic moving block is performed as one-SIC-sector.

For efficient use of input power (to increase efficiency) and reduce EM size, in its SSOEB or SSOEB and SSAMB, it is advisable to use a system of permanent magnets, which creates a strong magnetic field. Creation of strong magnetic field using permanent magnets depends on magnetic force of each magnet, their relative position and external conditions. Some solutions to these problems are described for example in patents: US 8512590 B2, US 8400038 B2, EP 1829188 A1 and US 20130313923 A1. US 8512590 B2 proposed a process for producing a sintered ferrite magnet. US 8400038 B2 suggested ways to focus magnetic field in order to minimize dissipation of magnetic field. EP 1829188 A1 proposed embodiments of mutual arrangement of permanent magnets in SSOEB, in particular in the form of sandwiches, in order to protect them from the degaussing and intensifying of magnetic field. US 20130313923 A1 suggesed to perform substrate of permanent magnets in SSOEB from material with increased thermal conductivity, for the heat sink and for the purpose of preventing of overheating of permanent magnets which can cause reduction of efficiency as well as demagnetization of permanent magnets.

Due to specific design features of a solenoid type EM it is almost never used before.

All known commercial EM and ones mentioned above, are made as oEM (oEM - one-vector electrical machine), and in their SSAMB there are used one-vector straight-toothed (generally of quadrangular shape) windings of electromagnets, which are known and developed for last 180 years. One-vector winding in vicinity of both sides (input and output) of winding enables to get a unidirectional magnetic field vector.

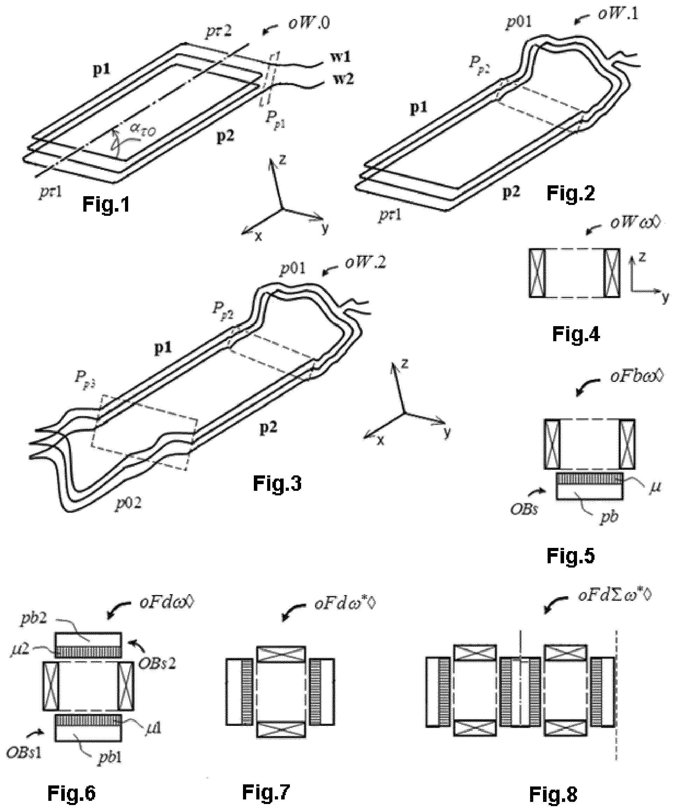

Figs. 1-8 show a one-vector winding oW and the possibilities of its docking in order to form a fraction of SIB that are proposed in WO 2015137790 A3.

Figs. 1-3 show spatial drawings of well-known types of one-vector winding oW: concentrated oW.0, half-concentrated oW.1 and dispersed oW.2, with incoming and outgoing parts of winding w1 and w2. Thus, in Figs. 1-3 windings of border areas involved and not involved in the forming of this windings are separated by planes $P_{Pj}$, where j = 1, 2, 3.

In all these types of oW in forming of a given winding there are involved only these straight parts of winding:

- concentrated winding oW.0, forming of this winding involves all four parts - p1, p2, $p^{\tau 1}$ and $p^{\tau 2}$ of winding;
- half-concentrated winding oW.1, forming of this winding involves three parts of $p^{\tau 1}$ winding - p1, p2 and ; winding part p01 may be involved in creating another winding;
- dispersed winding oW.2, forming of this winding involves two windings - p1, p2; parts p01 and p02 of winding oW can participate in forming of another winding.

In the concentrated winding oW.0, two parts p1 and p2 of winding form two its sides. Two parts $p^{\tau 1}$ and $p^{\tau 2}$ of winding form two end sides of one-vector winding.

In further, relative to spatial orientation of winding geometry of electromagnet, it will be applied the system of coordinates introduced in Figs. 1-3:

- xz-plane of electromagnets, the vertical plane, will be called xz-plane or h-plane;

- zy-plane of electromagnets, the top plane, will be called zy-plane or $\omega$-plane of electromagnet;

- xy-plane of electromagnets, the side plane, will be called xy-plane or D-piane of electromagnet.

In some cases, scans of IB (IB - inductive block), SIB or other object are convenient to represented in $\omega^*$-scan or $\bar{h}^*$-scan; they are respectively the same planes as the $\omega$-plane and h-plane, but their axes are rotated clockwise by an angle equal to $\dfrac{\pi}{2}$.

The distance between two lateral p1 and p2 winding parts is the winding width, the distance between two transverse $p^{\tau 1}$ and $p^{\tau 2}$ parts is the winding height.

Fig. 4 shows winding oW$\omega$ in the section of $\omega$-plane.

There are known created on base of oW the fractions of SIB (system of inductive blocks) shown in Figs. 5-8: basic fraction (one-sided) oFb$\omega$, closed fraction (two-sided) oFd$\omega$, closed fraction (two-sided) with the horizontal scan of an electromagnetic block AMB ($\omega^*$ - scan) oFd$\omega^*$ and a row of closed fractions (two-sided) with a horizontal scan of electromagnetic block AMB ($\omega^*$ -scan) oFd$\Sigma\omega^*$.

Figs. 5-8 also introduce notations: lateral OBs, first lateral OBs1 and second lateral OBs2 source-off blocks; inductive inhomogeneous medium $\mu$, first induction inhomogeneous medium $\mu_1$, second inductive inhomogeneous medium $\mu_2$, respectively, of lateral OBs, first lateral OBs1 and second lateral OBs2 source-off blocks; bridge /bus $p^b$, first bridge/bus $p^{b1}$, second bridge/bus $p^{b2}$ of magnetic field of, respectively, lateral OBs, first lateral OBs1 and second lateral OBs2 source-off blocks; bridges/buses of magnetic fields $ab11$ and $ab12$ New perspective type of EM is first proposed in WO 2015137790 A3 mEM (mEM - multi-vector electric machine) type with multi-vector windings and multi-vector electromagnets.

Multi-vector windings and electromagnets, when compared to the known one-vector windings and electromagnets, provide possibilities: of curved surface of inductive coupling and inductive coupling of high density per volume; reduced volume of winding material.

Figs. 9-117 show in schematic form, in accordance with the concepts set forth in WO 2015137790 A3, some examples of types and subtypes of the proposed multi-vector windings - their formation, symbolic notations, spatial orientation in the reporting coordinate system.

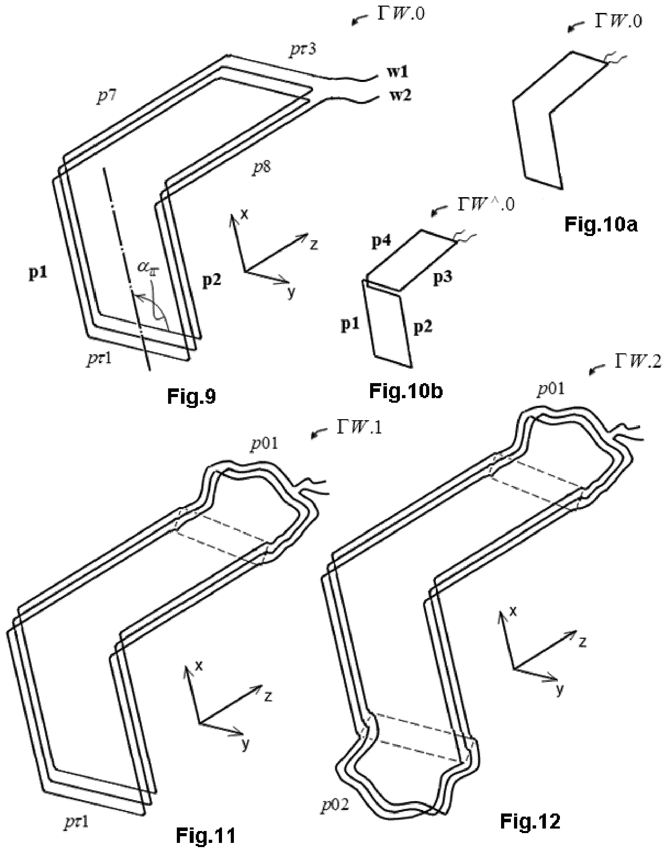

Figs. 9, 11 and 12 show, respectively, spatial drawings of a multi-vector types of one-hip ($\Gamma$-shaped) electromagnet windings with incoming and outgoing parts w1 and w2 of wiring: concentrated $\Gamma$W.0, half-concentrated $\Gamma$W.1 and dispersed $\Gamma$W.2. At the same time the border areas of winding parts, involved and not involved in the windings are separated by planes $P_{pj}$, where j = 1, 2, 3. In all these types of windings, as shown for one-vector winding, in the creation of these windings only the specified straight parts of the winding are involved.

Figs. 10a and 10b show coils of multi-vector $\Gamma$-shaped winding, for the sake of simplicity, in the fused form of, respectively, homogeneous source-drain type ΓW.0 and heterogeneous source-drain type ΓW^.0.

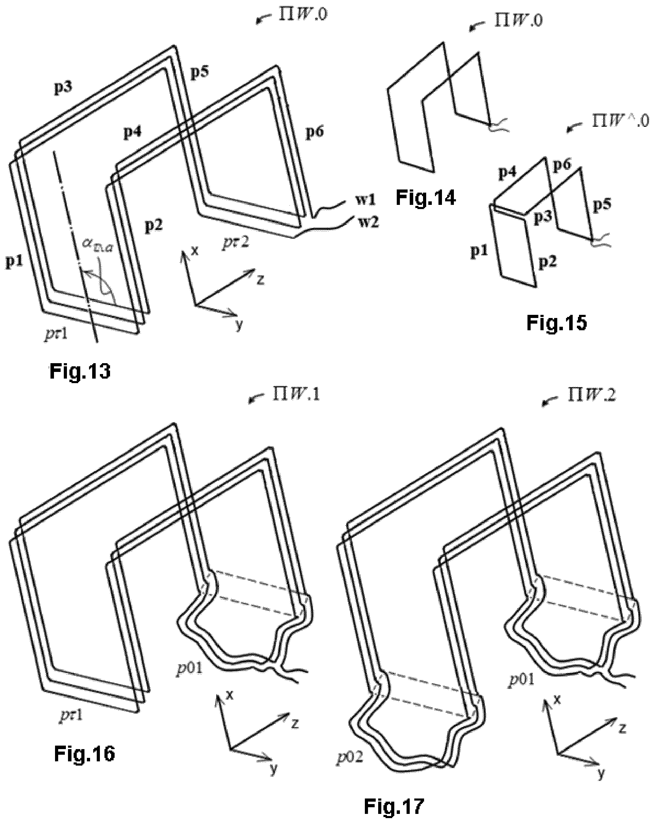

Figs. 13-17 show two-hip P -shaped winding of electromagnet. Figs. 13, 16 and 17 show the spatial views of multi-vector electromagnet, with a straight upper side parallel-two-hip winding, with incoming and outgoing parts w1 and w2 of wiring: concentrated W.0, half-concentrated W.1 and dispersed W.2. At the same time the border areas of winding parts, involved and not involved in the windings are separated by planes $P_{pj}$, where j = 1, 2, 3. In all of these types of windings, as shown for the one-vector winding, in creation of these windings there are involved only the specified straight parts of the winding. Figs. 14 and 15 show coils of multi-vector -shaped winding, for the sake of simplicity, in the fused form, respectively, of homogeneous source-drain type W.0 and heterogeneous source-drain type W^.0.

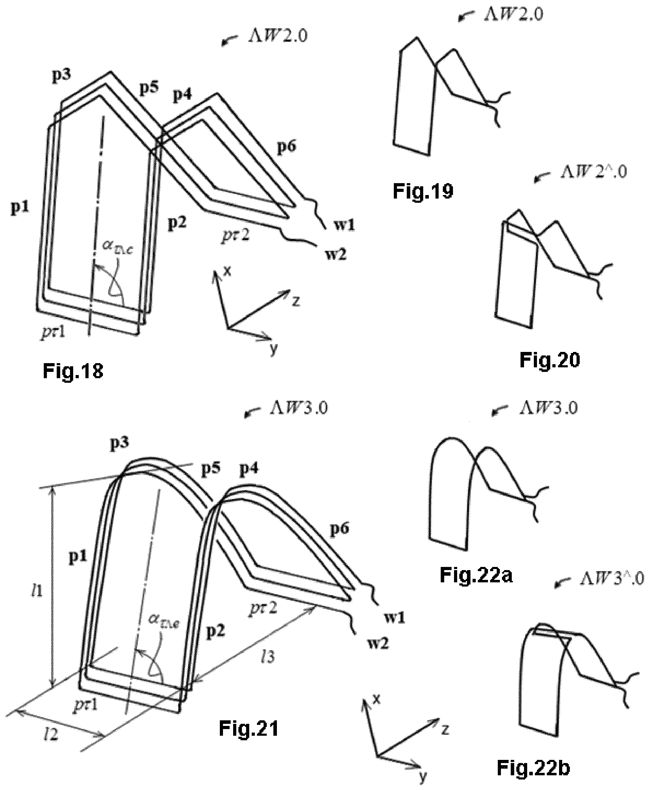

Figs. 18 and 21 show the spatial drawings of two Λ -shaped types of windings: with straight upper side of diverging W2.0 and the curve of the second order W3.0 concentrated multi-vector two-hip windings. Figs. 19 and 20 show coils of multi-vector two-hip winding W2.0, for simplicity, in the fused form, respectively, of homogeneous source-drain type W2.0 and heterogeneous source-drain type W2^.0 on Fig. 20. Figs. 22a and 22b show coils of multi-vector two-hip W3.0 winding represented, for simplicity, in the fused form, respectively, of homogeneous source-drain type W2.0 and heterogeneous source-drain type W3^.0.

In all types of two-hip -shaped and Λ-shaped electromagnet windings: two surface sides between two lateral parts $p^1$ and $p^2$ of windings form two lateral sides of the left winding part; two surface sides between two lateral parts $p^5$ and $p^6$ of winding form two lateral sides of its right part. The lower transverse parts $p\tau^1$ and $p\tau^2$ of winding form two of its end parts. Fig. 21 also shows the parameter notations of two-hip winding: height $l1$ ; width $l2$ ; distance $l3$ between the lower transverse parts of the winding at its base.

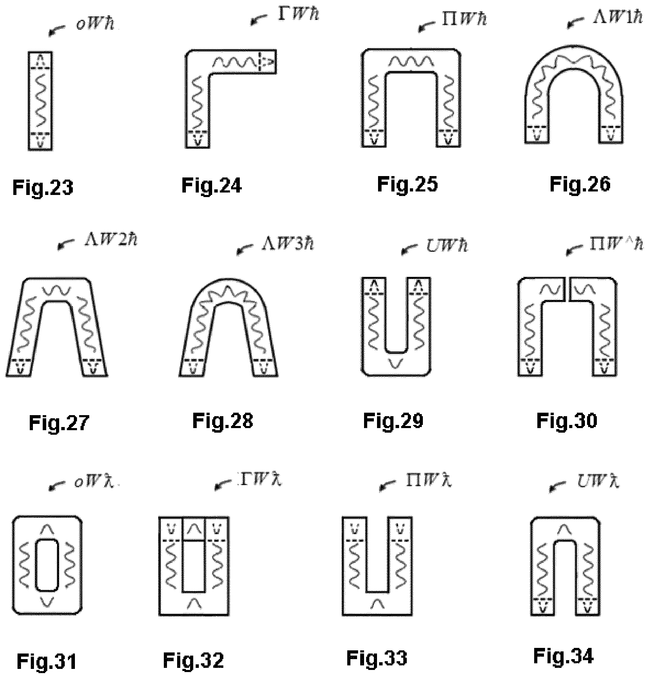

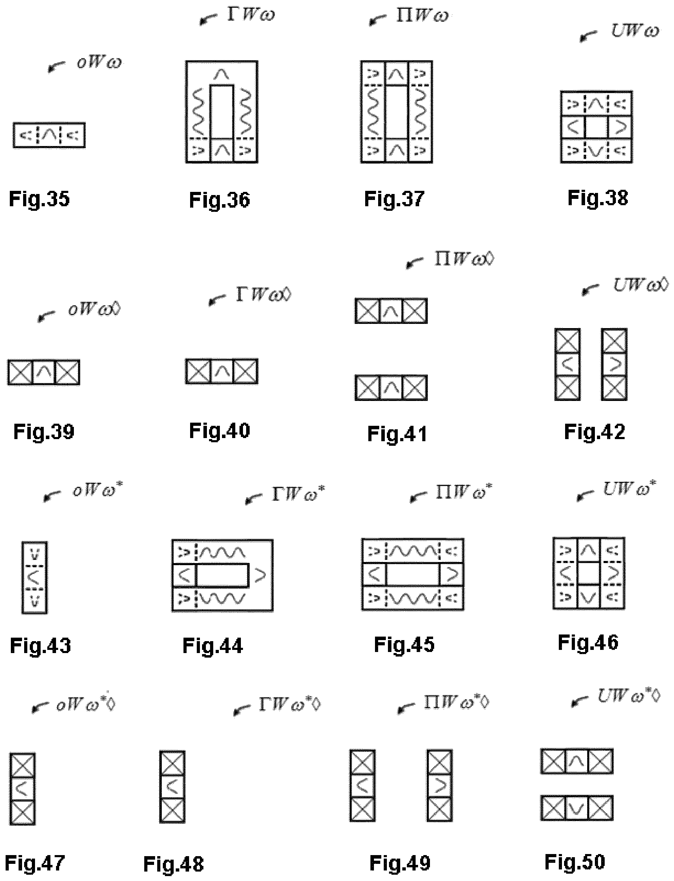

Figs. 23-50 show the symbolic views of multi-vector windings of mW electromagnets.

Figs. 23-30 show the symbolic views of electromagnet windings in the xz-plane (h-plane of electromagnets). Fig. 23 shows one-vector $oW\overline{h}$. Figs. 24-30 respectively show multi-vector windings: Γ-shaped - ΓW; -shaped - $W\overline{h}$; with semicircular upper side parallel two-hip Λ-shaped - $ΛW1\overline{h}$; with straight upper diverging sides two-hip Λ-shaped - $ΛW2\overline{h}$; with sector-ring upper divergent sides two-hip Λ-shaped - ΛW3; U -shaped - $UW\overline{h}$; with straight upper parallel sides two-hip - antisymmetric $W^\wedge\overline{h}$ of heterogeneous source-drain type.

Figs. 31-34 show the symbolic forms of the electromagnet coils in the xy - plane (D-plane of electromagnets). Fig. 31 shows one-vector - oWA. Figs. 32-34 respectively show multi-vector windings: Γ-shaped - $W\overset{\cdot}{Λ}$; -shaped - $W\overline{Λ}$; U - shaped - UWA.

Figs. 35-38 show the symbolic views of the electromagnet coils in the zy-plane (ω-plane of electromagnets). Fig. 35 shows one-vector - oWω. Figs. 36-38 respectively show multi-vector windings: Γ-shaped - ΓWω; -shaped - Wω; U-shaped - UWω.

Figs. 39-42 show symbolic types of electromagnet coils cuts in zy-plane (ω-plane of electromagnets). Fig. 39 shows one-vector - oΛ/ω. Figs. 40-42 respectively show multi-vector windings: Γ-shaped - ΓWω; -shaped - Wω; U - shaped - UWω.

Figs. 43-46 show the symbolic forms of the electromagnet windings in the ω*-scan. Fig. 43 shows one-vector - oWω*. Figs. 44-46 respectively show multi-vector windings: Γ-shaped - ΓWω*; -shaped -Wω*; U -shaped - UWω*.

Figs. 47-50 show the symbolic forms of electromagnet windings in the ω*-scan. Fig. 43 shows one-vector - oWω*. Figs. 44-46 respectively show multi-vector windings: Γ-shaped - ΓWω*; -shaped - Wω*; U -shaped - UWω*.

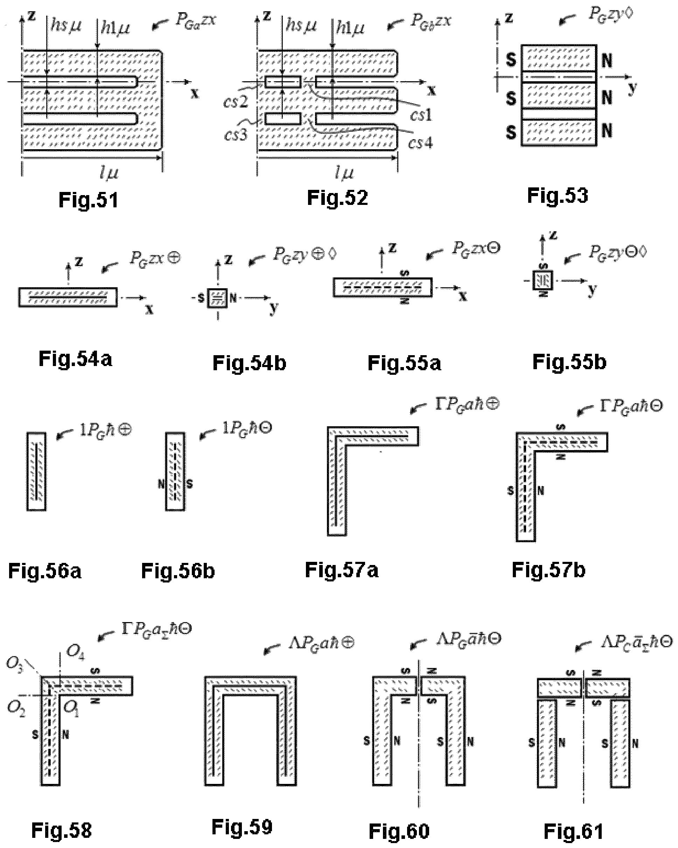

To create a high magnetic field within small volume and high steadiness of permanent magnet to extreme environmental conditions, WO 2015137790 A3 proposed to use the periodically-closed-multilayered $P_G$-type magnets and anti-symmetric group of magnets, which allow to create high strength and steadiness to extreme environmental conditions with a given direction in space the magnetic field. Figs. 51-61 show some examples of kinds of the proposed closed-multilayered $P_G$-type magnet and antisymmetric group of magnets - their formation, symbolic notations, spatial orientation in the reporting system of coordinates.

Figs. 51, 52 and 53 show two kinds of periodically-closed-multilayered $P_G$ - type magnets in the particular case, when the magnet has only three layers, and they are straight. Of course, they may contain two or more than three layers, and also they can also be curved. In any case, width of the gap between layers is small: hs $\mu$ → 0, layer's thickness is less than its length $hl\mu$ p $l\mu$.

Figs. 51, 52 show two kinds of periodically-closed-multilayered $P_G$-type magnets in the longitudinal vertical plane, respectively closed at edges $P_{Ga}zx$-type and closed through jumpers $P_{Gb}zx$-type. Fig. 52 shows that: the layers are closed through four jumpers $cs1$, $cs2$, $cs3$ and $cs4$; bi-symmetric relative to two planes - zy-plane of coordinates and the geometric mean plane parallel to the coordinate xy-plane. In general, these conditions are not necessary - the number of jumpers and spatial configurations can be arbitrary. Fig. 53 shows $P_G$-type magnet in the section of cross-vertical plane.

Figs. 54a, 54b, 55a, 55b in four mutually perpendicular planes show the symbolic notations of the $P_G$-type magnet: symbolic notation in Figs. 54a, 54b are corresponding to the positions of the magnet shown in Figs. 51, 52; symbolic notations in Figs. 55a, 55b are corresponding to the positions of the magnet when the coordinate xy-plane is parallel to the longitudinal-horizontal plane of the magnet.

Figs. 56a-60 show in **h** -plane (xz-plane of electromagnet coils) the symbolic notations of some geometry formation of $P_G$-type periodically-closed multi-magnet. Figs. 56a, 56 show symbolic notations of magnets shown in Figs. 54a and 55a, respectively, faced (to us) by single-polar side $1Ph\oplus$ and by bipolar side $1Ph\ominus$. Figs.57a and 57b show multi-vector one-hip magnets, respectively, faced by single-polar side $\Gamma P_Gah\oplus$ and by bipolar side $\Gamma P_Gah\ominus$. Fig. 58 show a multi-vector one-hip magnet faced to us by bipolar side $\Gamma P_Ga_\Sigma h\ominus$ and consisting of periodically-closed multi-layered magnets separated by any of the planes $O_1O_2$, $O_1O_3$ and $O_1O_4$. Fig. 59 shows faced by one polar side multi-vector two-hip magnet $\Lambda P_Gah\oplus$.

Of course, at any multi-vector magnet it can also be such varieties, as shown for the one-hip multi-vector magnet. Also other varieties may be performed for not layered magnets faced to us by single-polar or bipolar side.

Figs. 60 and 61 show faced to us by bipolar side the multi-vector two-hip magnets, each of which is an anti-symmetric group of magnets: $\Lambda P_G\overline{a}h\ominus$-consisting of two $\Gamma P_Gah\ominus$ -type of not layered magnets; $\Lambda P_C\overline{a_\Sigma}h\ominus$ - consisting of four not layered magnets.

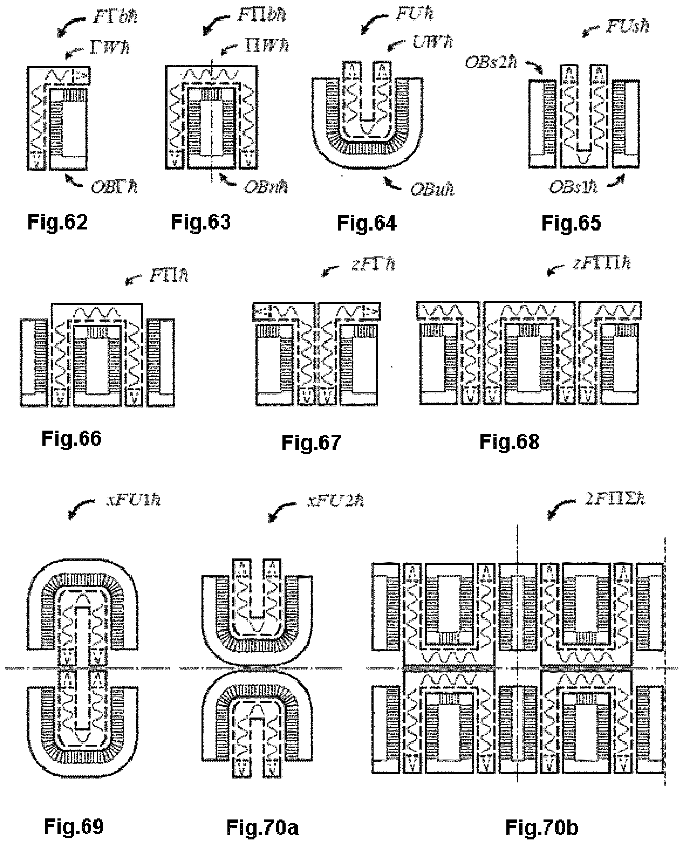

Figs. 62-70, relative to h-plane (xz-plane of electromagnet windings), in symbolic notation show some possibilities of forming of block structure types (principles of the interposition of various types of inductive blocks) in SIB. In SIB block structure it is possible conditionally to allocate at least one fraction of the blocks: basic fraction of SIB; closed fraction of SIB; z-integrated fraction of SIB; x-integrated fraction of SIB. At the same time, by the nature of location of blocks in the volume the multi-block SIB is divided into a single-row and multi-row structure.

As lateral, end and down sides of the base closed faction of SIB and of electromagnetic block are taken the correspondent sides of the electromagnet winding.

Note that in the figures: the dashed lines with dots are axes of symmetry; short-dashed lines indicate that the image chain is interrupted, and it can be continued with similar images shown.

The block structure in SIB is formed by electromagnetic block, created on the basis of one of the chains of winding types mentioned in Figs. 23-30, and another block conjugate (docked) to it. For example, some typical block structures on which easy to build other block structures. Figs. 62 and 63 show the SIB basic fractions F $\Gamma b\overline{h}$ and Fb$\overline{h}$, which are formed by windings $\Gamma W\overline{h}$ and W$\overline{h}$ respectively, when docking them to appropriate source-off blocks OB$\Gamma\overline{h}$ and OBn$\overline{h}$. All windings except UW and one-vector winding oW are open. At UW the distance between hips is made short and without the possibility of location in there of source-off block OEB.

Closed faction is formed by docking elements of source-off blocks, at the same time remains open only one side of the electromagnetic block. Some fractions of closed SIB are shown in Figs. 64-66: FU$\overline{h}$, FUs$\overline{h}$ and F$\overline{h}$.

In closed fractions the certain exception is FU, which is formed by docking of U-shaped winding with U-shaped block OBu. Source-off blocks OEB, as already noted, are divided into lateral source-off blocks OBs and non-lateral source-off blocks: the internal, such as OBn; semicircle OBu.

z-integrated fraction of SIB is formed by docking of two basic fractions with lateral sides, wherein z-integrated fraction may further comprise one or more source-off blocks. Some examples of formation of z-integrated fraction of SIB are shown in Figs. 67 and 68.

x-integrated fraction of SIB is formed by docking of two closed factions with end sides. Some examples of formation of x-integrated fractions are shown in Figs. 69 and 70a.

Single-row fraction comprises at least two windings, and any of them can be formed by selected from a number of mentioned base, closed and z-integrated fractions, by docking them together by lateral sides.

Multi-row structure of fraction comprises at least two single-row fractions, located one above the other.

Example of two-row fraction is shown in Fig. 70b.

Mentioned figures show not all possible variants of structure formation, but give principles of structure formation and it is easy to continue further such construction by a skilled person, based on given analogs and examples.

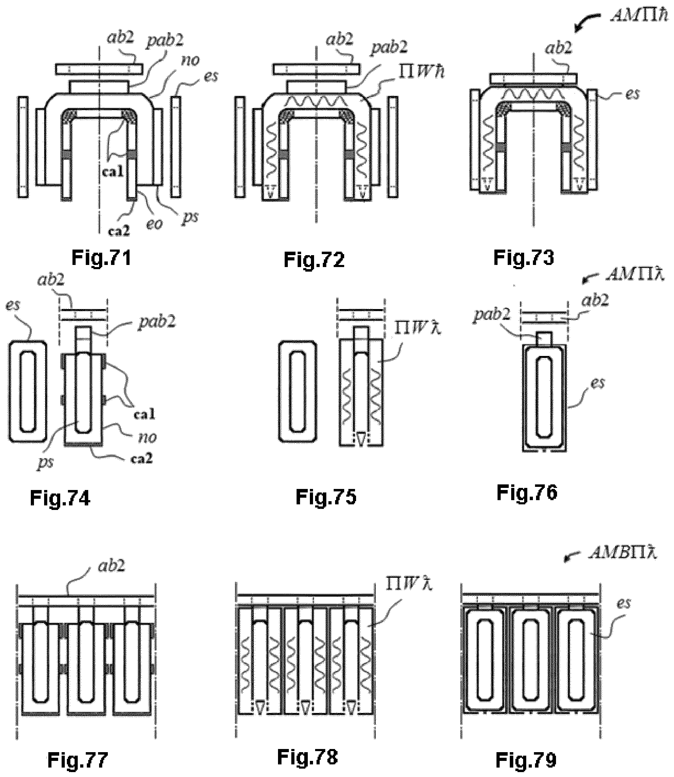

Figs. 71-79 show the -shaped (open type) electromagnetic block AMBW and it includes an open type electromagnet AM.

Figs. 71-73 show objects represented in a projection on h-plane of electromagnet. Fig. 71 shows electromagnetic block without winding and in an exploded view: the magnetic bridge/bus $ab2$ of electromagnet and connector/tooth $pab2$ for its mounting; mandrel/core for winding $no$ ; lateral shoe $es$ of electromagnet and connector/tooth $ps$ for its mounting; inner shoe $eo$ ; additional lateral guide limiter $ca1$ and lower guide limiter $ca2$ electromagnet winding. Fig. 72 shows the same as that in Fig. 71, but includes an electromagnet winding $W\overline{h}$. Fig. 73 presents an assembled electromagnet AM$\overline{h}$. On Fig. 73 all the parts, except the external magnetic bridge/bus of electromagnet $ab2$ and the connector/ tooth for landing $pab2$, belong to AM$\overline{h}$ electromagnet.

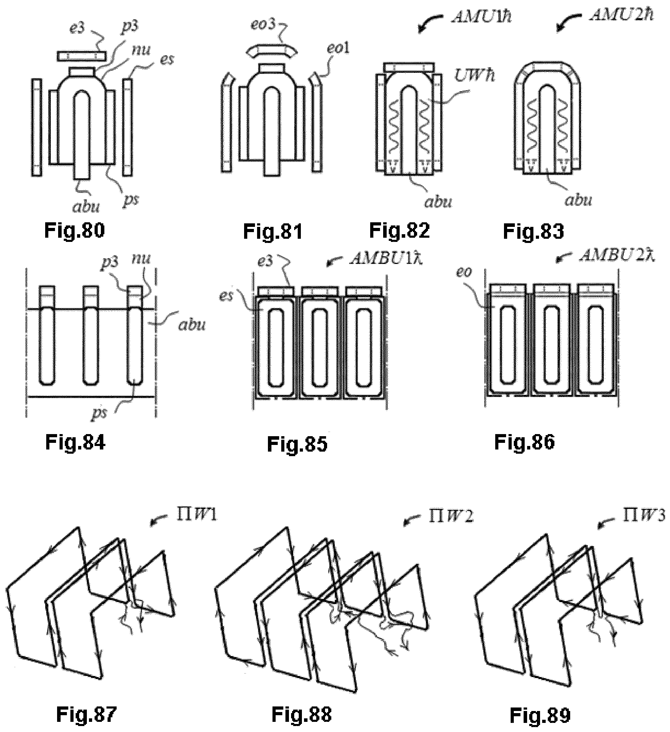

On Figs. 74-79 the sector of electromagnetic block AMB and its electromagnet AM are shown in D-plane of electromagnet. Figs. 74 and 75 correspond to Figs. 71 and 72, but are presented in the D-piane. Fig. 76 shows the same as that in Fig. 73, but is presented in the D-plane and the magnetic bridge/bus of electromagnet $ab2$ is shown separately from the electromagnet. Figs. 77-79 show a sector of electromagnetic block AM: on Fig. 77 it is shown without shoe $es$ and winding; Fig.78 shows it without shoe $es$ ; Fig. 79 shows AMB$\overline{\Lambda}$ in full body. It should be noted that the additional lateral guide limiters $ca1$ and $ca2$ of electromagnet winding can be made solid and made of magneto-insulating material. Let's turn to the questions of the possible implementation of a U-shaped (closed type) solenoid. On Figs. 80-83 a U - shaped electromagnetic block AMBU and its AMU electromagnet are shown in projection on h-plane of electromagnet. Fig. 80 shows solenoid AMU presented without winding in the exploded view: the internal magnetic bridge/bus of electromagnet abu ; mandrel/core for winding nu ; lateral flat shoe es of electromagnet and its landing connector/ tooth ps ; the upper flat shoe of electromagnet e3 and its landing connector/tooth p3. Fig. 81 shows the same as that in Fig. 80, but at least one side of the shoe eo1 of electromagnet and upper shoe eo3 of electromagnet are performed in a curved form. Figs. 82 and 83 correspond to Figs. 80 and 81, but include winding UW$\overline{h}$ and assembled as two electromagnets AMU1$\overline{h}$ and AMU2$\overline{h}$ respectively, with external flat shoes and with curved outer shoes, which comprise a magnetic bridge/bus of electromagnet abu.

Figs. 84-86 in the projection on D-plane of EM show sectors of a closed type of electromagnetic blocks AMBU1$\overset{\cdot\cdot}{\overline{\Lambda}}$ and AMBU2A: Fig.84 shows it without shoes ps and without winding W; on Figs. 85 and 86 are shown AMBU1$\overset{\cdot\cdot}{\overline{\Lambda}}$ and AMBU2A, respectively, the sectors of closed types of electromagnetic blocks with flat shoes and with curved shoes.

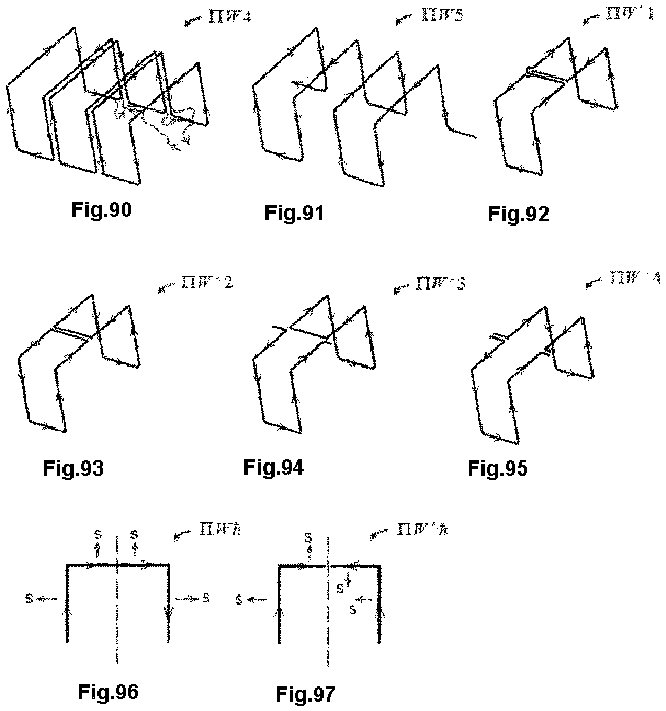

Figs. 87-97 show some examples of multi-vector two-hip windings. Figs. 87-90 show the possibilities of implementation of parallel (Figs. 87 and 88) and antiparallel (Figs. 89 and 90) currents in one-nest parts of two adjacent windings at one pair of input and output windings for two and three winding assemblies. Fig. 91 shows an example of half-concentrated winding. On Figs. 92-95 are shown examples of docking of two parts of the multi-vector two-hip antisymmetric windings. Figs. 96 and 97 show the orientation of magnetic field vectors in different parts of winding, respectively, for the symmetric and antisymmetric windings.

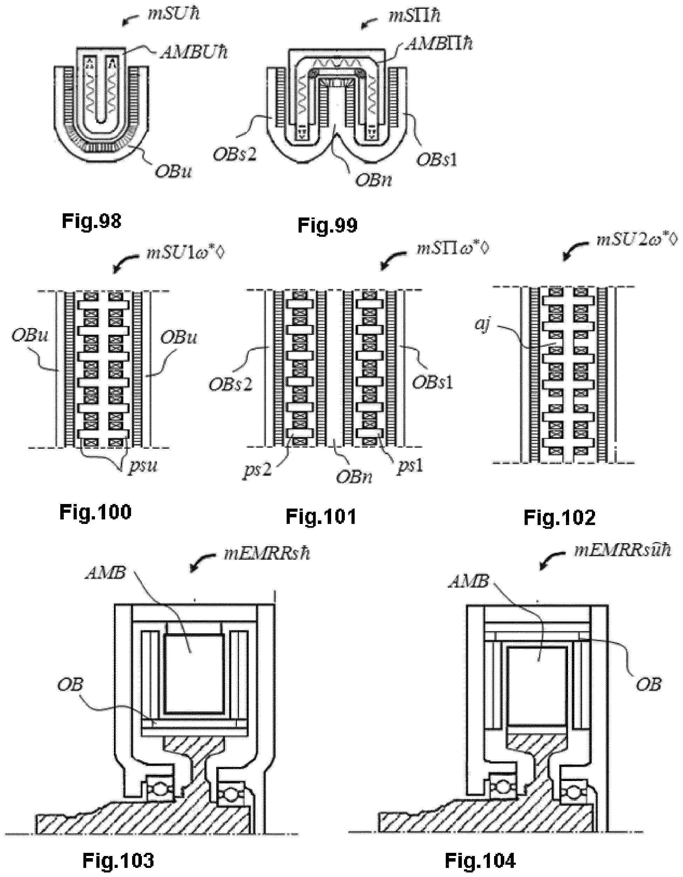

Figs. 98 and 99, as projections on $\overline{h}$-plane of electromagnet, respectively show U -shaped SU$\overline{h}$ and -shaped S$\overline{h}$ system inductive blocks. Figs. 100 and 101 show, in ω*-scan and ω*-scan respectively, the U -shaped SU1ω* and - shaped Sω* system inductive blocks. In this case the notations are: AMBU - U-shaped electromagnetic block; OBu - U-shaped source-off block; psu - core-poles of AMBU; AMB - -shaped electromagnetic block; OBn, OBs1 and OBs2 - respectively, -shaped, right lateral and left lateral components of source-off block; psn, ps1 ps2 - respectively, -shaped, right lateral and left lateral components of core-poles of AMB.

Fig. 102, in ω*-scan and ω*-scan, show the U -shaped SU2ω*. SU2ω* unlike SU1ω* has air pole gap aj through each two poles.

Figs. 103 and 104 schematically show the section in projection on $\overline{h}$ -plane of electromagnet, respectively, with fixed AMB (AMB is attached to the housing) and movable AMB (AMB - attached to the central shaft), the solid (with centered shaft) round-rotational mEMRRs$\overline{h}$ and mEMRRs$\hat{\overline{u}}\overline{h}$.

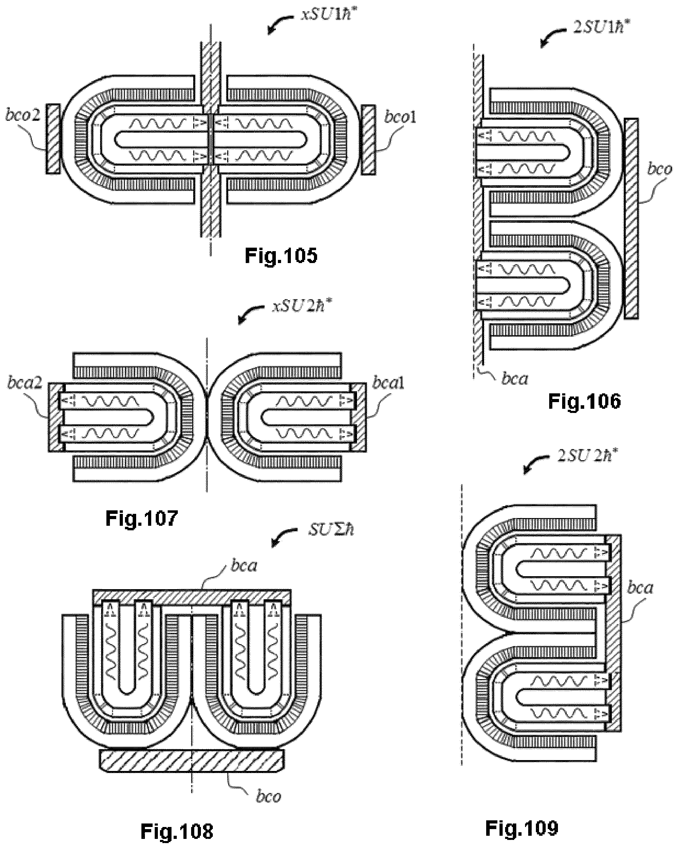

Figs. 105-109 in the projection on the $\overline{h}$ -plane of EM, show possible location of auxiliary supports bcoj and bcaj (where j = 1, 2 - number of auxiliary supports), for attachment of some mentioned types of SIB in electromagnet. To perform EM with fixed AMB, bcaj are attached to housing. Note that each SIB, 2SU1$\overline{h}$* and 2SU2$\overline{h}$* has two rows of blocks one above the other (two-row SIB).

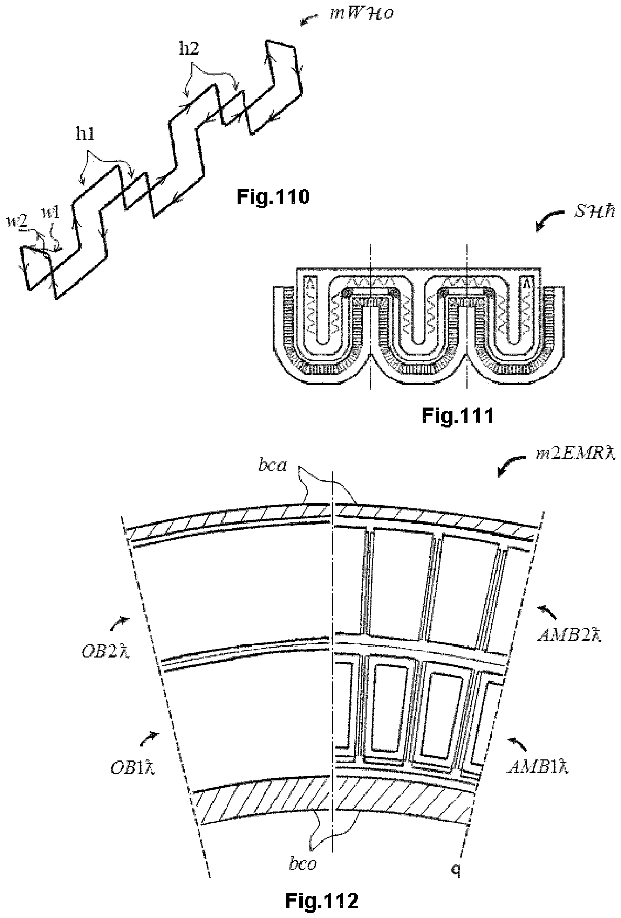

On Figs. 110 and 111 are shown longitudinally-multi-humped concentrated multi-vector winding (harmonic winding) mW$Ho$ and corresponding thereto longitudinally-multi-humped multi-vector system inductive block (harmonic SIB) $\mathcal{SHh}$. Figs. 110 and 111 show humps h1 and h2 that equal to two. In general, the number of humps and accordingly the length of $\mathcal{SHh}$ can be arbitrary. Fig. 110 show concentrated winding with incoming and outgoing parts w1 and w2 of wire. In general, the winding can be half-concentrated or dispersed.

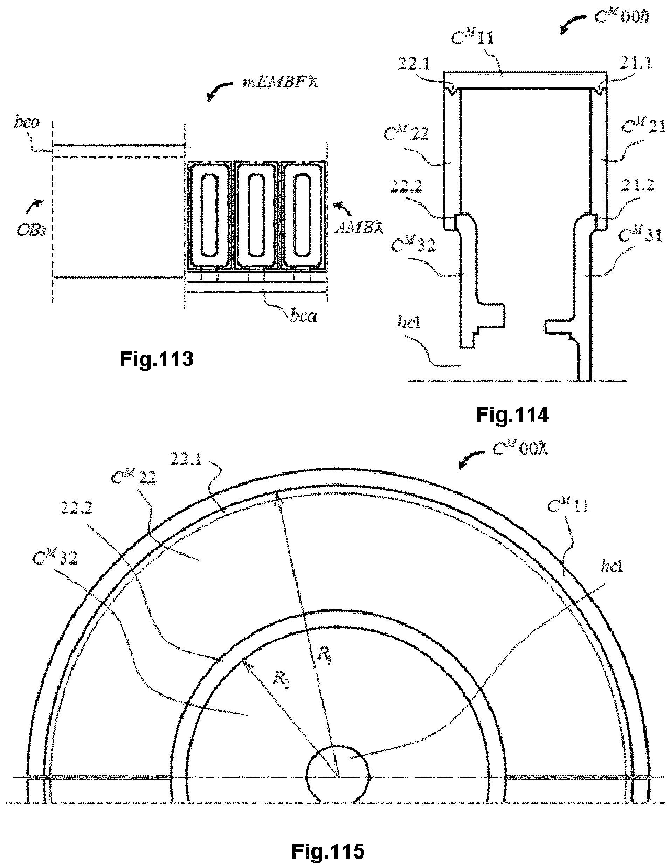

On the basis of these multi-vector mSIBs it can be made not only multi-vector round-rotational mEMRRs with single-row structure of inductive blocks, but other types of mEMs. Figs. 112 and 113 in section in projection of D-plane (lateral plane) of EM show, respectively, rotational EM in the form of m2EMRA and reciprocative EM in the form of mEMBF$\overline{h}$. The m2EMRA made as vertical-two-block and can serve as an example for constructing vertical-multi-block EMs. The m2EMRA includes: upper block compartment - electromagnetic block AMB2$\overset{\cdot\cdot}{\overline{\Lambda}}$ and source-off block OB2$\overset{\cdot\cdot}{\overline{\Lambda}}$; lower block compartment - electromagnetic block AMB1$\overset{\cdot\cdot}{\overline{\Lambda}}$ and source-off block OB1$\overset{\cdot\cdot}{\overline{\Lambda}}$. The mEMBF$\overline{h}$ includes solenoid block AMB$\overset{\cdot\cdot}{\overline{\Lambda}}$ and source-off block OBs. Figs. 112 and 113 also show supports bca and bco, designed, respectively, for electromagnetic blocks and source-off blocks.

Fig. 114 in projection on h-plane and on Fig.115 in projection on D-plane show one of variants of housing for rotational EM. Figs. 114 and 115 show only one half with rotational symmetry of image: the upper end face of housing made in the form of two half-rings, it is shown only one half $C^M$11 ; the upper lateral sides of housing, made in the form of four circular disk-shaped half-rings, it is shown only two of them $C^M$21 and $C^M$22; bottom two lateral sides of housing, one of which is designed as a circular disc-shaped half-ring (with a hole for the central shaft), it is shown only one half $C^M$32 and the other that performed in a circular disc-shaped form, it is shown only one half $C^M$31. Each of these housing components may be performed separately and dismountable from each other.

An overview is given for inventions to show the level of development of EM, structural features of EM components and introduced terms suitable for a general review and analysis of various types of EM components and EM as a whole. In known inventions of EM there are used numerous and narrowly specific terms.

From this review of inventions it follows a general conclusion for all kinds of known EM - electromagnets are not effectively used.

The main object of the present invention is to provide designs of EM, where electromagnets are used effectively.

The invention additionally provides an increase in the efficiency value. At the same time, the proposed variants of inductive coupling in SIB cover all types of EM.

The claimed EM and electric drive match the criteria of invention, as at the filing date there are not revealed similar solutions. EM and the electric drive have a number of significant differences from the known devices and methods for their implementation. The proposed EM and the drive can be implemented on the basis of existing tools with mastered industrial materials, components and technologies.

To carry out the main task of the present invention it is proposed EM (EM - electric machine), made as oEM (oEM - one-vector electrical machine) or as mEM (mEM - multi-vector electric machine), which includes SIB (SIB - system of inductively interacting blocks) consisting of two movable relatively to each other SSIBs (SSIB - subsystem of inductively interacting blocks), wherein at least one IB (IB - inductively interacting block) is AMB (AMB - electromagnetic block).

The main distinctions of the proposed technical solutions from the known technical solutions are that they are made comprising at least one of the features (a) - (c):

(a) made as multi-sector - the total number of SIC sectors (SIC - inductive coupling surface) is two or more than two;

(b) therein at least one AM (AM - electromagnet) being Q-shaped and includes Q-shaped winding;

(c) includes 2S$H$ (2S$H$ - longitudinally-multi-hump two-row SIB).

Other differences between the proposed method from the known methods lie in the fact that:

- its RREM (RREM - round-rotational electric machine) type is made selected from a list: RRsEM - solid round-rotational electric machine (with a central shaft); RRrEM - ring round-rotational electric machine;
- its RRrEM and CREM (CREM - curvilinear-rotational electric machine) types' guiding bearing and/or magnetic cushion, located between the moving and fixed IB, are made sectorial;
- its CREM type is performed with CHM (CHM - characteristic line contour of motion), selected from the group: rounded polygonal (two or more angles) shape; ellipsoidal shape;

- its fixed block, in curved section of CHM, include GCE (GCE - stay-support of rigid predetermined shape) to maintain a flexible common base of coupled with it the moving block selected from the group: fixed stay-support with the guiding system of bearings or magnetic cushions; the axle with roller;
- its curved (rounded) regions of the rounded polygonal CHM are identical;
- ZIC (ZIC - inductive coupling zone) of one of its IB is performed as full-interval SIC, another conjugate ZIC is made as multi-sector SIC, and each SIC sector has arbitrary size greater than zero;
- its muti-sector inductively-conjugate couple of $^{IB}1$ and $^{IB}2$ blocks is performed depending on the selected number of SIC sectors of one of IB, for example $^{IB}1$:

(a) therein as one-sectorial, then $C_2 \leq L_1 < C_\Sigma$;

(b) therein made as two-sectorial, then $C_2 \leq \Sigma L_{1j} < C_\Sigma$ and SIC sectors in $IB_1$ are located in the opposite sides of CHM or length of CHM region corresponding to the maximum interval among SIC sectors in $IB_1$ is equal to $\dfrac{C_\Sigma}{2}$;

(c) therein as three-sectorial, then

$$\dfrac{C_\Sigma}{2} \leq \Sigma L_{1j} < C_\Sigma$$ and SIC sectors in $IB_1$ are

distributed evenly along the length of CHM, or

$$L_{1j} = L_{132} = \dfrac{C_2}{3}$$ , and two SIC sectors are

located in $IB_1$ on an arc distance corresponding to length of CHM equal to $\dfrac{C_2}{3}$ and third SIC

sector in $IB_1$ is located equidistant from the other two SIC sectors in $IB_1$;

(d) wherein as four-sectorial, then $C_2 \leq \Sigma L_{1j} < C_\Sigma$ and SIC sectors' centers in $IB_1$ are located at equal distances from each other; thereto, in subparagraphs (a) - (d) of this paragraph there are introduced notations: $C_\Sigma$ - length of CHM;

$$C_2 = \dfrac{C_\Sigma}{n2}$$ —

$L_{1j}$ - length of j's SIC sector in $IB_1$; length of CHM, corresponding to the interval between centers of two adjacent SIC sectors in $IB_2$, wherein $n2$ - number of SIC sectors in $IB_2$;

- its multi-sector inductively-conjugate pair of blocks is performed with provision of constancy of areas of surfaces in simultaneous mutual inductive coupling, regardless relative positions of moving IB and fixed IB;
- its guiding bearings and/or magnetic cushions, located between moving and fixed IBs, are made as sectorial;
- guiding bearings therein and/or magnetic cushions are fixed in those areas where the electromagnets.

To solve the technical problem it is proposed the drive (electric drive) from one or more EM with realization of a direct drive from an electric motor or realization of movement of working machine actuators through kinematic transmission.

The main difference between the proposed technical solution and prior art is that the electric drive is made common for two movable IBs, moving relative to each other in the opposite directions.

Other difference between the proposed method from the known methods lie in the following:

- the value of interaction force between the first moving IB and its conjugated fixed IB equal to the force of interaction between the second moving IB and its conjugated fixed IB;

- first moving IB and second moving IB are conjugate with one fixed IB or with different fixed IBs;

- moving blocks are made as rings, homothetic and selected from a number of structural varieties:

  (a) moving blocks are made in different sizes and are located on the same plane and/or on different planes;

  (b) moving blocks are made in the same sizes and are located on different planes.

Referring now to drawings in which identical elements, generally, are indicated only once by reference numerals. The present invention may be embodied in many variants, only certain embodiments and designs, to facilitate a better understanding of the proposed technical solutions, will be described by way of examples presented in schematic drawings.

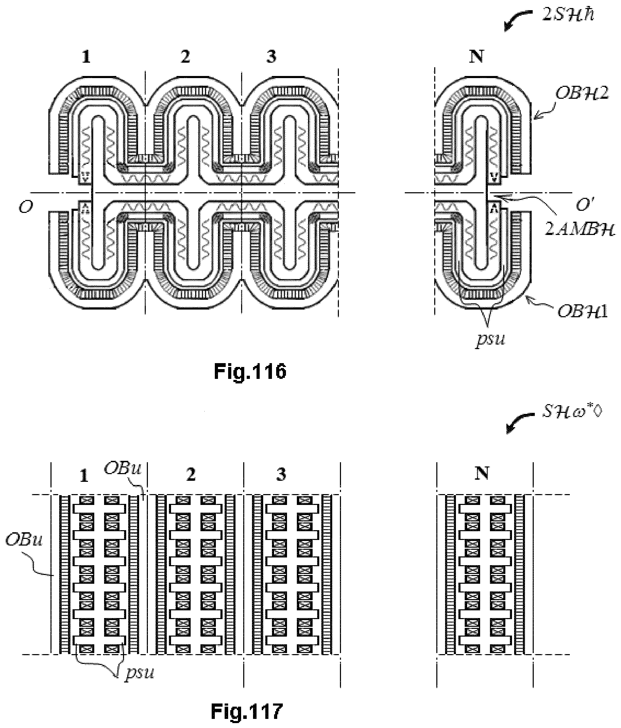

Fig. 116 in projection on h-plane of EM is shown a longitudinally-multi-humped multi-vector (harmonic) two-row (with a two-row block structure) SIB as 2S$H$. The $2S\mathcal{H}\hbar$ includes: a longitudinally-multi-humped multi-vector (harmonic) 2AMB$H$ electromagnetic block; longitudinally-multi-humped multi-vector (harmonic) source-off blocks OB$H$1 and OB$H$2. The $2S\mathcal{H}\hbar$ is symmetric relative to axis OO'.

Fig. 117 in ω*-scan and ω*-sections shows one of halves, symmetrically relative to axis OO', of the longitudinally-multi-humped multi-vector (harmonic) two-row (with a two-row block structure) SIB as 2S$H$.

As seen from Figs. 116 and 117, 2S$H$ includes N (arbitrary number) similar sub-blocks, where two at edges, the first and the N-th, are identical, and all the rest medium blocks do not differ among them.

In this cut, ω*-scan and ω*-section, all N sub-blocks look identical, repeating N cuts SU1ω* of a single block SU$\overline{h}$, shown on Figs. 98 and 100.

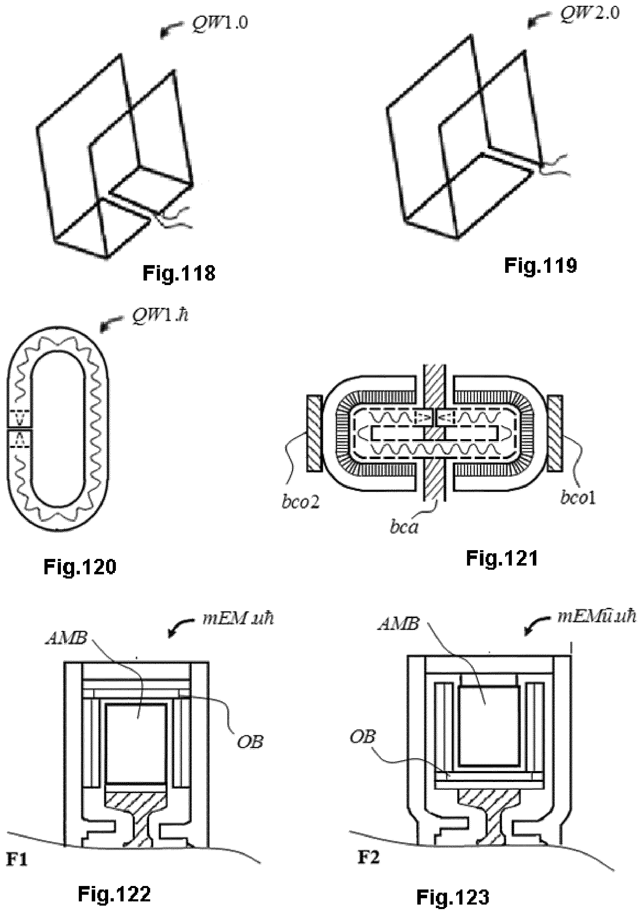

Figs. 118 and 119 respectively show two spatial drawings of Q-shaped windings: with gap in winding in the middle part of winding QW1.0 and with gap in the corner part of winding QW2.0. Figs. 118 and 119 show concentrated windings with incoming w1 and outgoing w2 parts of winding wire. In general, windings could be half-concentrated or dispersed. Fig. 120 shows a symbolic view of Q-shaped type of winding with gap in the middle part of winding QW1.0.

Fig. 121 in projection on h-plane of EM shows possibility of arranging auxiliary supports bco1, bco2 and bca to attach SIB, made on basis of QW1.0 winding in EM.

Figs. 122 and 123 in projection on h-plane of EM respectively show, with fixed AMB (AMB - attached to housing) and movable AMB (OB - sourse-off block attached to housing), main parts (bounded by lines F1 and F2) mEM.u$\overline{h}$ and mEMû.u$\overline{h}$ of EM of general type mEM$\overline{h}$ and mEMû$\overline{h}$. Main parts of the EM of general types mEM$\overline{h}$ and mEMû$\overline{h}$ imply including any type of selected from a number of well-known, including longitudinally-multi-humped multi-vector (harmonic) in the form of S$H$.

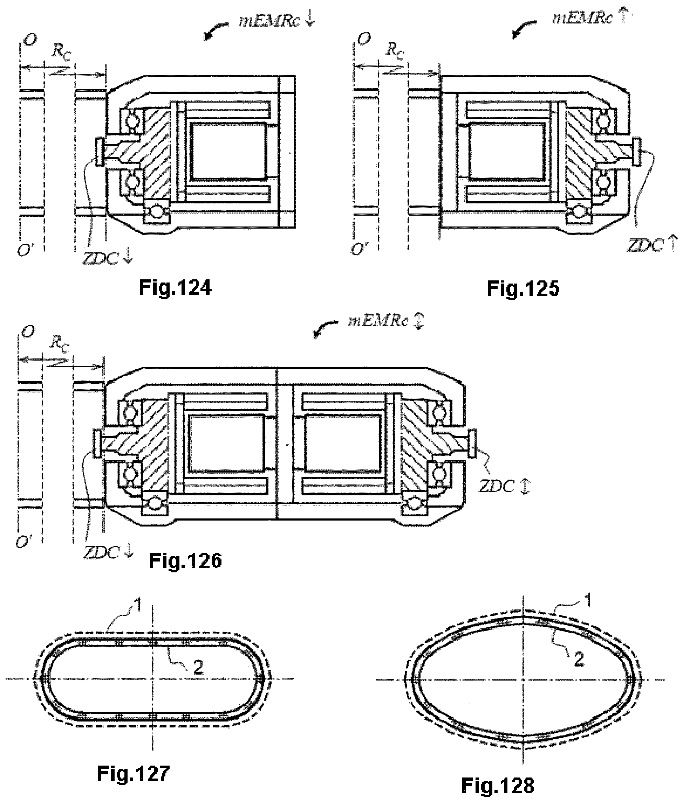

Figs. 124, 125 and 126 show ring electric machine types mEMRc↓, mEMRc↑ и mEMRc↕, which include SIB that is made, respectively, with the inner-directed ZDC↓, outwardly-directed ZDC↑ and bidirectional ZDC↕, where ZDC - zone of drive clutch (zone where the drive clutch is possible). Figs. 124, 125 and 126 introduce notations: OO' - the axis of rotation; $R_C$ - the distance from the center of rotation of mEM.u to ZIC..

Figs. 127 and 128 show examples of curved rotational CREM EMs. In this case, each rotation is along the curve indicated in figures: on Fig. 127 the CHM (CHM - characteristic line contour of motion) is in the form of a closed curved line, where its two lateral sides are performed in the form of straight lines, and two end sides are formed as sectors of a circle (lune with rounded corners); on Fig. 128 - by an ellipse. Of course, CREM can be performed with any CHM selected from the group of a rounded polygonal (two or more angles) forms; ellipsoid form. On Figs. 127 and 128 by figures 1 and 2 are designated inductively coupled surfaces SIC (the surface where the inductive coupling is realized), respectively corresponding to source-off block OEB and electromagnetic block AMB. Thick dashed lines show the location of SIC of OEB, quadrangular grilles show the areas of location of SIC of AMB. They indicate that SIC of OEB and SIC of AMB are located along the whole perimeter of the curved rotor.

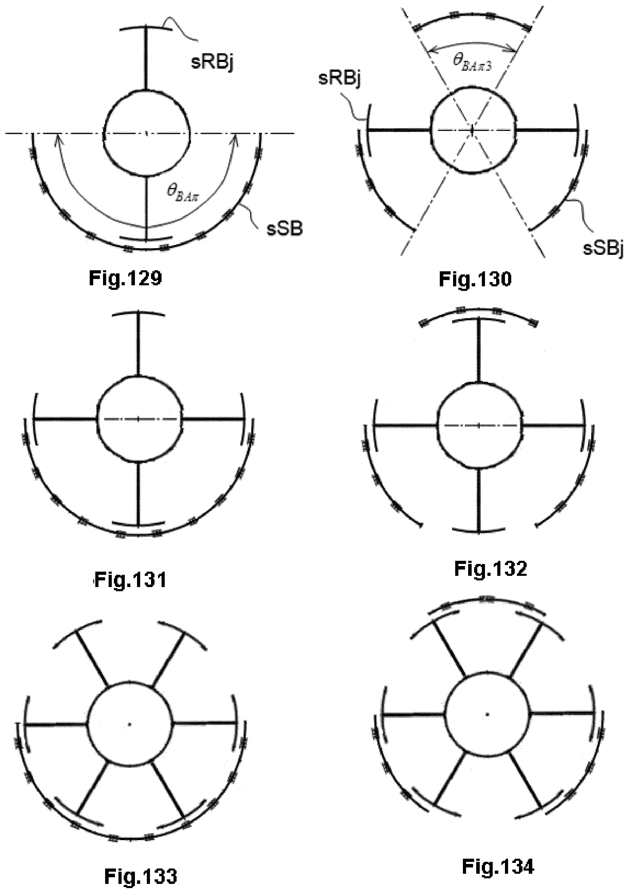

Figs. 129-148 in the projection on the A -plane of FPGB (muti-sector inductively-conjugate couple of blocks) show the different types of ZDC realization (ZDC - zone of drive coupling) at CHM (CHM - characteristic line contour of motion of FPGB) of round shape spin.

The technical and economic advantage of FPGB with SIC sectors, e.g. EM with sector groups of electromagnets, in comparison with FPGB of the same power with full-interval ring SIC of electromagnets, is that one large electromagnet is more compact and has higher efficiency compared to several smaller electromagnets with the same total power output as that of a large electromagnet. These advantages of FPGB blocks with sector EM promise great prospects for their wide use inside terrestrial and air vehicles.

When considering a multi-sector SIC EM it is assumed that the following conditions are met: constancy of azimuthal angular distributions of width and square of SIC sectors of rotor block; constancy of surface squares in simultaneous mutual drive clutch, regardless of position of rotor block relative to starter block.

With multi-sector SIC it can be performed any, including curved, EM. Examples of embodiments of a multi-sector SIC EM on Figs. 129-148 are given for the range of round-rotational EM, as they will be more descriptive to a reader.

For one sector sSB starter block with azimuthal angle $\theta_{BA\pi} = \pi$, as shown in Fig. 129, or for three sector sSBj starter block in an arc with the azimuth angle

$$\theta_{BA\pi3} = \frac{\pi}{3}$$

, in each, where three sectors of starter block placed at intervals with azimuth angle

$$\theta_{BA\pi3} = \frac{\pi}{3}$$

, as shown in Fig. 130, in creation of inductive coupling it is involved half of area of sRBj SIC sectors (j = 1, 2) of two-sector rotor block.

For mentioned $\theta_{BA\pi} = \pi$ and $\theta_{BA\pi3} = \frac{\pi}{3}$ sector distributions of starter block such pattern (involving half of surface of all sectors of rotor block) is valid, as shown in Figs. 131-134, for any even number of rotor block sectors.

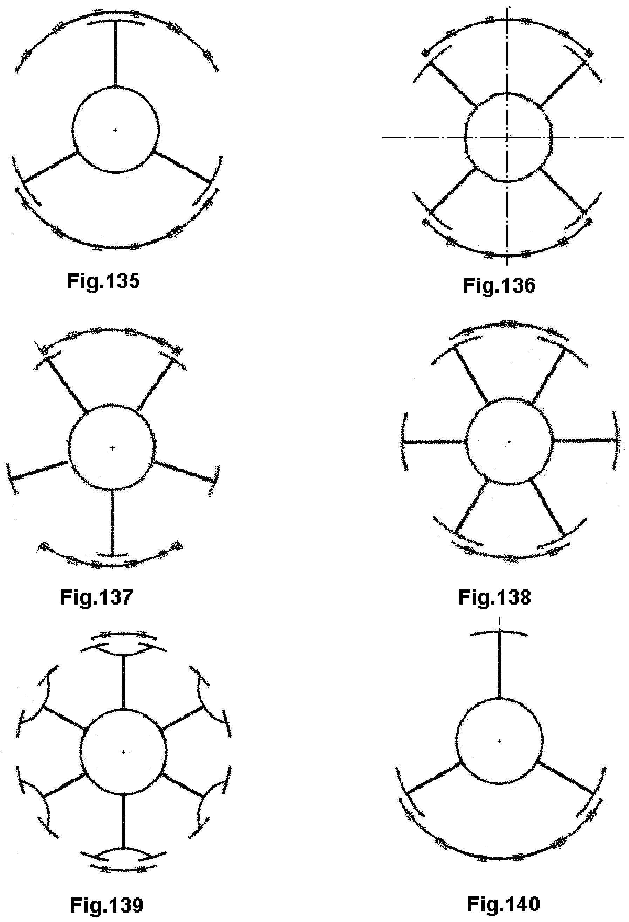

Figs. 135-139 show some examples for different surface numbers $N_{Pj}$ of rotor block sectors at distribution of two starter block sectors with the same azimuth

$$\theta_{BAj} = \frac{2\pi}{N_{Pj}}$$

angle in arc and located at opposite sides of the ZDC. Therein, in creation of magnetic induction coupling two SIC sectors of rotor block are involved.

Figs. 140-142 show a number of examples for different numbers $N_{Pj}$ of SIC sectors of rotor block, when one sector of starter block has an azimuth angle

$$\theta_{BAj} = \frac{2\pi}{N_{Pj}}$$

. Therein, in creation of magnetic induction coupling one SIC sector of rotor block is involved.

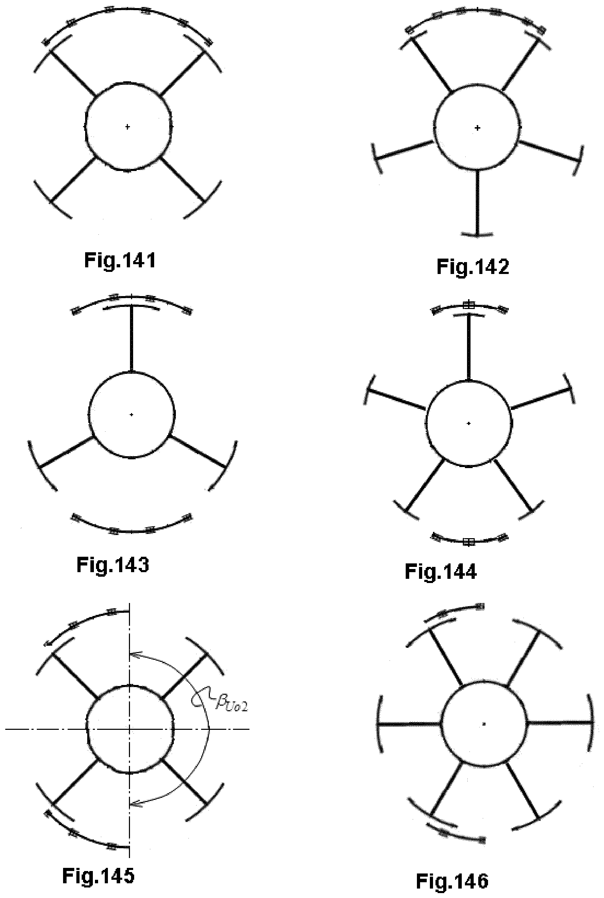

Figs. 143-146 show a number of examples for different numbers $N_{Pj}$ of SIC sectors of rotor block at distribution of two starter block sectors with the same

$$\theta_{BAj} = \frac{\pi}{N_{Pj}}$$

azimuth angle . Therein in creating of inductive coupling it is involved one SIC sector of rotor block. Moreover, for the odd number of SIC sectors of rotor block, sectors of starter block are arranged as shown in Figs. 143 and 144, on the opposite side of ZDC; for an even number of SIC sectors of rotor block, starter block sectors are arranged, as shown in Figs. 145 and 146, so that from one side the azimuthal angular between them equals to $\beta_{Uo2} = \pi$.

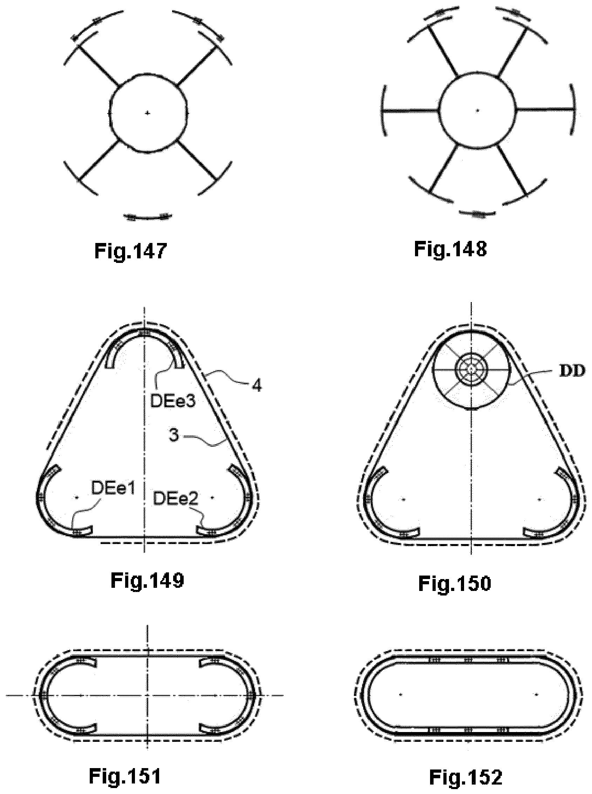

Figs. 147 and 148 show a number of examples for various even numbers $N_{Pj}$ of SIC sectors of rotor block at three starter block sectors, each of which is performed

$$\theta_{BAj3} = \frac{2\pi}{3N_{Pj}}$$

in arc with an azimuth angle . Thereto two sectors of starter block are located at an azimuth angular distance between them equal to

$$\theta_{BAj3} = \frac{2\pi}{3N_{Pj}}$$

. The third sector of starter block is located on their opposite side. Therein in creating of inductive coupling it is involved one SIC sector of rotor block.

Fig. 149 shows ZDC with rounded corners of triangular CHM 3, formed by three direct sector electric drives DEe1, DEe2 DEe3 and DEe3.

Fig. 150 shows ZDC with rounded corners of triangular CHM 3, formed by three corner forming drives: by disk drive DD and two sectoral direct electric drives DEe1 and DEe2.

Figs. 151 and 152 show ZDC with two-angled rounded corners.

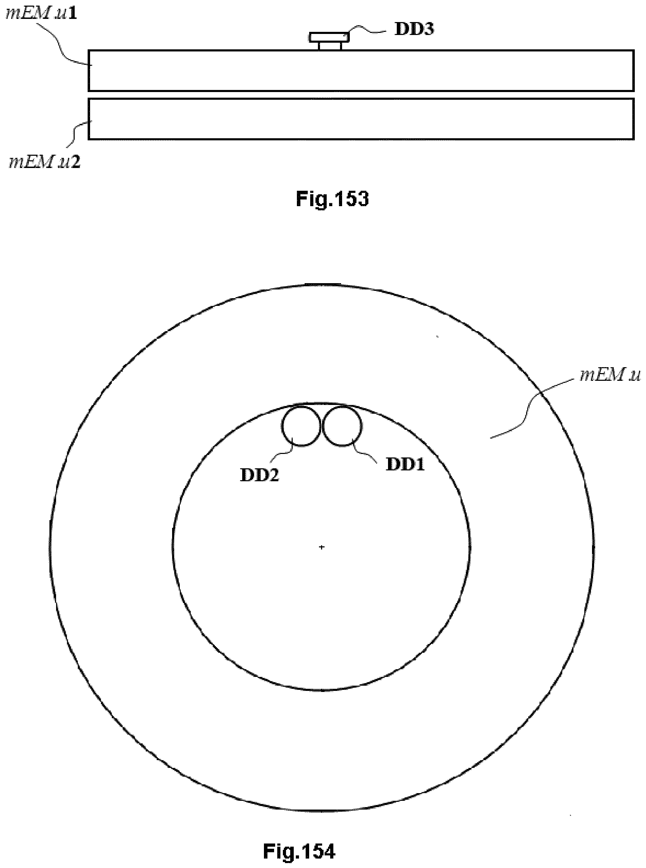

Figs. 153-154 illustrates an example of movement of actuators of working machine through a kinematic transmission from two moving IBs, moving relative to each other in the opposite directions, performed in two different mEM.u1 and mEM.u2, i.e. in two different EMs. Therein DD1 and DD2 are drives. The common output (working) drive is DD3. DD3 can be a continuation of one of DD1 and DD2, e.g., DD1 can rotate in the same direction as the DD2.

The principles of operation of any well-known EM, as mentioned, is in motion relative to each other movable SSIB, and production of electricity or mechanical motion.

**Claims**

1. **EM** (EM - electric machine), made as oEM (oEM - one-vector electric machine) or as mEM (mEM - multi-vector electric machine), which include SIB (SIB - system of inductively interacting blocks) consisting of two movable relative to each other SSIBs (SSIB - subsystem of inductively interacting blocks), wherein at least one IB (IB - inductively interacting block) is AMB (AMB - electromagnetic block), ***characterized* in that** it is made including at least one of the features (a)-(c):

   (a) it is made as multi-sector - the total number of SIC (SIC - inductive coupling surface) sectors is at least two;
   (b) therein at least one AM (AM - electromagnet) is performed as Q-shaped and includes Q-shaped coil;
   (c) it includes 2S$H$ (2S$H$ - longitudinally-multi-hump double-row SIB).

2. **EM by claim 1, *characterized* in that** its RREM (RREM - round-rotational electric machine) type is made selected from the list: RRsEM - solid round-rotational electric machine (with central shaft); RRrEM - ring round-rotational electric machine.

3. **EM by claim 1, *characterized* in that** in its RRrEM and CREM (CREM - curvilinear-rotational electric machine) types the guiding bearing and/or magnetic cushion, located between moving and fixed IBs, are made as sectorial.

4. **EM by claim 2, *characterized* in that** its CREM type is made with CHM (CHM - characteristic line contour of motion) selected from the list: rounded polygonal (two or more angles) shape; ellipsoidal shape.

5. **EM by claim 4, *characterized* in that** its fixed block, in curved region of **CHM,** includes **GCE (GCE** - stay-support of rigid predetermined shape) to maintain a flexible common base of conjugate moving block selected from the list: fixed stay-support with guiding system of bearings or magnetic cushions; axle with roller.

6. **EM by claim 4, *characterized* in that** its curved (rounded) regions of rounded polygonal CHM are identical.

7. **EM by any claim 1-6, *characterized* in that** the ZIC (ZIC - inductive coupling zone) of one of its IB is performed as full-interval SIC, another conjugate ZIC is made as multi-sector SIC, where each SIC sector has arbitrary size greater than zero.

8. **EM by claim 1-6, *characterized* in that** its muti-sector inductively-conjugate couple of blocks $IB_1$ and $IB_2$ is made depending on selected number of SIC sectors of one of IB, for example $IB_1$:

   (a) wherein it is made as one-sectorial, then $C_2 \leq L_1 < C_\Sigma$;
   (b) wherein it is made as two-sectorial, then $C_2 \leq \Sigma L_{1j} < C_\Sigma$ and SIC sectors in $IB_1$ are located in the opposite sides of CHM or, length of CHM region corresponding to the maximum interval between SIC sectors in $IB_1$ is equal to $\dfrac{C_\Sigma}{2}$;
   (c) wherein it is made as three-sectorial, then

   $$\dfrac{C_\Sigma}{2} \leq \Sigma L_{1j} < C_\Sigma$$

   and SIC sectors in $IB_1$ are distributed evenly along the length of CHM, or

   $$L_{1j} = L_{132} = \dfrac{C_2}{3}$$

   and two SIC sectors in $IB_1$ are located in an arc distance corresponding to

   $$\dfrac{C_2}{3}$$

   length of CHM equal to, and the third SIC sector in $IB_1$ is located equidistant from the other two SIC sectors in $IB_1$;
   (d) wherein it is made as four-sectorial, then $C_2 \leq \Sigma L_{1j} < C_\Sigma$ and centers of SIC sectors in $IB_1$ are located at equal distances from each other; where in subparagraphs (a)-(d) of this paragraph the following notations are introduced: $C_\Sigma$ - length of CHM; $L_{1j}$- length of the $j$'s SIC sector in $IB_1$; $C_2 = \dfrac{L_C}{n2}$ - length of CHM corresponding to the interval between centers of two adjacent SIC sectors in $IB_2$, wherein $n2$ - number of SIC sectors in $IB_2$.

9. **EM by claim 8, *characterized* in that** its multi-sector inductively-conjugate pair of blocks is made with provision of constancy of the surfaces' squares being in simultaneous mutual inductive coupling, regardless of the relative position of the moving and fixed IBs.

10. **EM by any claim 8 or 9, *characterized* in that** therein guiding bearings and/or magnetic cushions, located between moving and fixed IBs, are made as sectorial.

11. **EM by claim 10,** *characterized* **in that** therein guiding bearings and/or magnetic cushions are fixed in the same areas as electromagnets.

12. **Electric drive of one or more EM,** with realization of a direct drive from electric motor or with realization of motion of working machine actuators through kinematic transmission, *characterized* **in that** it is made common for two movable IBs that are moving relative to each other in the opposite directions.

13. **Electric drive by claim 12,** *characterized* **in that** the force of interaction between first moving IB and its conjugated fixed IB equals to value of force of interaction between second moving IB and its conjugated fixed IB.

14. **Electric drive by any claim 12 or 13,** *characterized* **in that** its first moving IB and second moving IB are conjugated with one fixed IB or with different fixed IBs.

15. **Electric drive by any claim 13 or 14,** *characterized* **in that** its moving blocks are made as rings, homothetic and selected from a number of structural varieties:

> (a) Moving blocks that are made in different sizes and are located on the same plane and/or on different planes;
> (c) Moving blocks are made in same size and located on different planes.

Fig.1

Fig.2

Fig.3

Fig.4

Fig.5

Fig.6

Fig.7

Fig.8

**Fig.9**

**Fig.10a**

**Fig.10b**

**Fig.11**

**Fig.12**

Fig.13

Fig.14

Fig.15

Fig.16

Fig.17

Fig.18

Fig.19

Fig.20

Fig.21

Fig.22a

Fig.22b

oWℏ

**Fig.23**

ΓWℏ

**Fig.24**

ΠWℏ

**Fig.25**

ΛW1ℏ

**Fig.26**

ΛW2ℏ

**Fig.27**

ΛW3ℏ

**Fig.28**

UWℏ

**Fig.29**

ΠW^ℏ

**Fig.30**

oWλ

**Fig.31**

ΓWλ

**Fig.32**

ΠWλ

**Fig.33**

UWλ

**Fig.34**

$oW\omega$

Fig.35

$\Gamma W\omega$

Fig.36

$\Pi W\omega$

Fig.37

$UW\omega$

Fig.38

$oW\omega\Diamond$

Fig.39

$\Gamma W\omega\Diamond$

Fig.40

$\Pi W\omega\Diamond$

Fig.41

$UW\omega\Diamond$

Fig.42

$oW\omega^*$

Fig.43

$\Gamma W\omega^*$

Fig.44

$\Pi W\omega^*$

Fig.45

$UW\omega^*$

Fig.46

$oW\omega^*\Diamond$

Fig.47

$\Gamma W\omega^*\Diamond$

Fig.48

$\Pi W\omega^*\Diamond$

Fig.49

$UW\omega^*\Diamond$

Fig.50

Fig.51

Fig.52

Fig.53

Fig.54a

Fig.54b

Fig.55a

Fig.55b

Fig.56a

Fig.56b

Fig.57a

Fig.57b

Fig.58

Fig.59

Fig.60

Fig.61

$FTb\hbar$
$\Gamma W\hbar$

$OBT\hbar$

**Fig.62**

$F\Pi b\hbar$
$\Pi W\hbar$

$OBn\hbar$

**Fig.63**

$FU\hbar$
$UW\hbar$

$OBu\hbar$

**Fig.64**

$FUs\hbar$
$OBs2\hbar$

$OBs1\hbar$

**Fig.65**

$F\Pi\hbar$

**Fig.66**

$zFT\hbar$

**Fig.67**

$zFT\Pi\hbar$

**Fig.68**

$xFU1\hbar$

**Fig.69**

$xFU2\hbar$

**Fig.70a**

$2F\Pi\Sigma\hbar$

**Fig.70b**

20

**Fig.71**

**Fig.72**

*AMΠ*ℏ

**Fig.73**

**Fig.74**

**Fig.75**

*AMΠλ*

**Fig.76**

**Fig.77**

**Fig.78**

*AMBΠλ*

**Fig.79**

**Fig.80**

**Fig.81**

**Fig.82**

**Fig.83**

**Fig.84**

**Fig.85**

**Fig.86**

**Fig.87**

**Fig.88**

**Fig.89**

$\Pi W 4$

Fig.90

$\Pi W 5$

Fig.91

$\Pi W^{\wedge} 1$

Fig.92

$\Pi W^{\wedge} 2$

Fig.93

$\Pi W^{\wedge} 3$

Fig.94

$\Pi W^{\wedge} 4$

Fig.95

$\Pi W \hbar$

s   s

s   s

Fig.96

$\Pi W^{\wedge} \hbar$

s

s

s   s

s

Fig.97

Fig.98

Fig.99

Fig.100

Fig.101

Fig.102

Fig.103

Fig.104

$xSU1\hbar^*$

*bco2*

*bco1*

**Fig.105**

$2SU1\hbar^*$

*bco*

*bca*

**Fig.106**

$xSU2\hbar^*$

*bca2*

*bca1*

**Fig.107**

$SU\Sigma\hbar$

*bca*

*bco*

**Fig.108**

$2SU2\hbar^*$

*bca*

**Fig.109**

mWℋo

h2

h1

w2 w1

**Fig.110**

Sℋℏ

**Fig.111**

m2EMRλ

bca

OB2λ

OB1λ

AMB2λ

AMB1λ

bco

q

**Fig.112**

**Fig.113**

**Fig.114**

**Fig.115**

**Fig.116**

**Fig.117**

**Fig.118**

**Fig.119**

**Fig.120**

**Fig.121**

**Fig.122**

**Fig.123**

$mEMRc\downarrow$

**Fig.124**

$mEMRc\uparrow$

**Fig.125**

$mEMRc\updownarrow$

**Fig.126**

**Fig.127**

**Fig.128**

sRBj

$\theta_{BA\pi}$

sSB

**Fig.129**

sRBj

$\theta_{BA\pi3}$

sSBj

**Fig.130**

**Fig.131**

**Fig.132**

**Fig.133**

**Fig.134**

Fig.135

Fig.136

Fig.137

Fig.138

Fig.139

Fig.140

Fig.141

Fig.142

Fig.143

Fig.144

Fig.145

Fig.146

**Fig.147**

**Fig.148**

**Fig.149**

DEe3

4

3

DEe1

DEe2

**Fig.150**

DD

**Fig.151**

**Fig.152**

*mEM u***1**

DD3

*mEM u***2**

**Fig.153**

*mEM u*

DD2      DD1

**Fig.154**

## INTERNATIONAL SEARCH REPORT

| International application No. |
|---|
| PCT/KZ 2016/000011 |

| A. CLASSIFICATION OF SUBJECT MATTER |
|---|
| H02K1/06 (2006.01)   H02K 3/04 (2006.01) |
| According to International Patent Classification (IPC) or to both national classification and IPC |

| B. FIELDS SEARCHED |
|---|
| Minimum documentation searched (classification system followed by classification symbols) |
| H02K 1/00, 1/06, 3/00, 3/04 |
| Documentation searched other than minimum documentation to the extent that such documents are included in the fields searched |
| Electronic data base consulted during the international search (name of data base and, where practicable, search terms used) |
| PatSearch (RUPTO internal), USPTO, PAJ, Esp@cenet, DWPI, EAPATIS, PATENTSCOPE, Information Retrieval System of FIPS |

C. DOCUMENTS CONSIDERED TO BE RELEVANT

| Category* | Citation of document, with indication, where appropriate, of the relevant passages | Relevant to claim No. |
|---|---|---|
| A | US 8310126 B 1 (MOTOR PATENT LICENSORS, LLC) 13.11.2012 | 1-15 |
| A | RU 2458435 C1 (ROSSIISKAYA FEDERATSIYA, OT IMENI KOTOROI VYSTUPAET MINISTERSTVO SHOMGPSHENNOSTI I TORGOVLI) 10.08.2012 | 1-15 |
| A | US 8508094 B2 (VALEO EQUIPEMENTS ELECTRIQUES MOTEUR) 13.08.2013 | 1-15 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 October 2016 (10.10.2016) | 13 October 2016 (13.10.2016) |

| Name and mailing address of the ISA/ | Authorized officer |
|---|---|
| | |
| Facsimile No. | Telephone No. |

Form PCT/ISA/210 (second sheet) (July 1998)

## INTERNATIONAL SEARCH REPORT

| International application No. |
|---|
| PCT/KZ 2016/000011 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

The requirement of unity of invention is not met for the following reasons:
In independent claim 1, the special technical features that define a contribution over the prior art are: the electric machine has a multiple-vector configuration, wherein the total number of segmented inductive coupling surfaces is greater than or equal to two.
In independent claim 12, the special technical features that define a contribution over the prior art are: the electric drive is common to two moveable, inductively-interacting units, which move relative to one another in opposite directions.
Therefore, the claims comprise two groups of inventions, in claims 1-11 and 12-15, which are not linked by a single inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015137790 A3
- US 8508094 B2
- US 8368273 B
- US 8013489 B2
- US 8310126 B1
- EP 2466725 A1
- US 7898134 B1
- US 20080088200 A1
- US 20060244320 A1
- US 8242661 B2
- US 20130147291 A1
- EP 2242167 A3
- US 20110291504 A1
- US 20130057091 A1
- US 20130049494 A1
- US 20130249324 A1
- US 8587163 B2
- US 8593019 B2
- US 20090009010 A1
- US 8624446 B
- US 20130076159 A1
- US 8339003 B1
- US 8512590 B2
- US 8400038 B2
- EP 1829188 A1
- US 20130313923 A1